# EUROPEAN PATENT APPLICATION

(11) **EP 4 013 015 A1**
(43) Date of publication of application: **15.06.2022**
(21) Application number: 21198367.1
(22) Date of filing: 22.09.2021
(51) Int. Cl.: H04L 41/5025, H04L 41/5009, H04L 41/12, H04L 43/045, G06F 9/455, H04L 41/0654, H04L 41/16, H04L 43/0823, H04L 43/065, H04L 43/10, H04L 43/0829, H04L 43/0817

(54) **DETECTION AND REMEDIATION OF VIRTUAL ENVIRONMENT PERFORMANCE ISSUES**

(30) Priority: 09.12.2020 US 202017116858
(71) Applicant: INTEL Corporation, Santa Clara, CA 95054 (US)
(72) Inventor: LOFTUS, Ciara, Tuam Co Galway, H54DP30 (IE); BROWNE, John J., Limerick, V94 C44N (IE); VERRALL, Timothy, Pleasant Hill, 94523 (US); KUTCH, Patrick, Tigard, 97223 (US); MACNAMARA, Christopher, Limerick, V94X65T (IE); RYAN, Brendan, Limerick, V94Y65R (IE); CREMINS, David, Limerick (IE); CHILIKIN, Andrey, Limerick, V94 E1CN (IE)
(74) Representative: 2SPL Patentanwälte PartG mbB

(57) **Abstract**

Telemetry information provided by a computing device includes switching key performance indicators (KPIs), platform KPIs, and topology information. The telemetry information is used to identify performance issues at the computing device, such as packets being dropped in a virtual switching stack or misconfiguration errors. A virtual switching monitor can identify which layers in the switching stack have errors and whether the errors occur along a transmit or receive path in the switching stack. A virtual switching controller can identify remedial actions that can be taken at the computing device to remedy a performance issue. A remedial action can be taken automatically, subject to user approval, or automatically after additional criteria are met.

## Description

### BACKGROUND

Troubleshooting performance issues in a virtual computing environment, such as an NFV (network function virtualization) environment, typically involves analyzing telemetry information made available by a number of resources and components in the computing environment. Telemetry information can be generated by different tools and processes, such as kernel tools and orchestration utilities. Identifying a performance issue and a remedial action that can be taken to remedy the issue typically involves a high degree of user involvement as the user usually needs to derive a computing environment topology and wade through a large amount of telemetry information.

### BRIEF DESCRIPTION OF THE DRAWINGS

FIG. 1 illustrates a block diagram of an exemplary computing system for identifying and remediating performance issues in a virtual computing environment.
FIG. 2 illustrates an exemplary graphical topology view and a first exemplary scenario in which the technologies disclosed herein can be utilized to remedy a dynamic performance issue.
FIGS. 3A & 3B illustrate a second exemplary scenario in which technologies disclosed herein can be utilized to remedy an initial misconfiguration issue.
FIG. 4 is a flowchart of an exemplary method of detecting and remediating performance issues in a computing system.
FIG. 5 is a block diagram of an exemplary computing device in which technologies described herein may be implemented.
FIG. 6 is a block diagram of an exemplary processor core that can execute instructions as part of implementing technologies described herein.

### DETAILED DESCRIPTION

Troubleshooting performance issues in a virtual computing environment, such as an NFV (network function virtualization) environment, can be difficult and often requires a high degree of human intervention. This conflicts with some of the core concepts of NFV, which include substantially reducing capital and operational expenditure and enabling rapid acceleration of innovation in network services and operations. The technologies disclosed herein reduce the amount of human involvement required in performance issue detection and remediation in virtual computing environments and reduces the amount of error injected into issue detection and remediation due to human involvement by providing automatic issue detection and correction mechanisms. The technologies disclosed herein also offer the ability to maintain manual control over the remediation process for services providers reluctant to relinquish such control over their environment. The ability to automatically generate graphical topology views of a virtual computing environment is a further advantage over existing performance issue detection approaches.

In the following description, specific details are set forth, but embodiments of the technologies described herein may be practiced without these specific details. Well-known circuits, structures, and techniques have not been shown in detail to avoid obscuring an understanding of this description. "An embodiment," "various embodiments," "some embodiments," and the like may include features, structures, or characteristics, but not every embodiment necessarily includes the particular features, structures, or characteristics.

Some embodiments may have some, all, or none of the features described for other embodiments. "First," "second," "third," and the like describe a common object and indicate different instances of like objects being referred to. Such adjectives do not imply objects so described must be in a given sequence, either temporally or spatially, in ranking, or any other manner. "Connected" may indicate elements are in direct physical or electrical contact with each other and "coupled" may indicate elements co-operate or interact with each other, but they may or may not be in direct physical or electrical contact. Terms modified by the word "substantially" include arrangements, orientations, spacings, or positions that vary slightly from the meaning of the unmodified term. For example, a utilization rate that is substantially 100% includes utilization rates that are within a few percentage points of 100%.

The description may use the phrases "in an embodiment," "in embodiments," "in some embodiments," and/or "in various embodiments," each of which may refer to one or more of the same or different embodiments. Furthermore, the terms "comprising," "including," "having," and the like, as used with respect to embodiments of the present disclosure, are synonymous.

Reference is now made to the drawings, wherein similar or same numbers may be used to designate the same or similar parts in different figures. The use of similar or same numbers in different figures does not mean all figures including similar or same numbers constitute a single or same embodiment. In the following description, for purposes of explanation, numerous specific details are set forth in order to provide a thorough understanding thereof. It may be evident, however, that the novel embodiments can be practiced without these specific details. In other instances, well-known structures and devices are shown in block diagram form to facilitate a description thereof. The intention is to cover all modifications, equivalents, and alternatives within the scope of the claims.

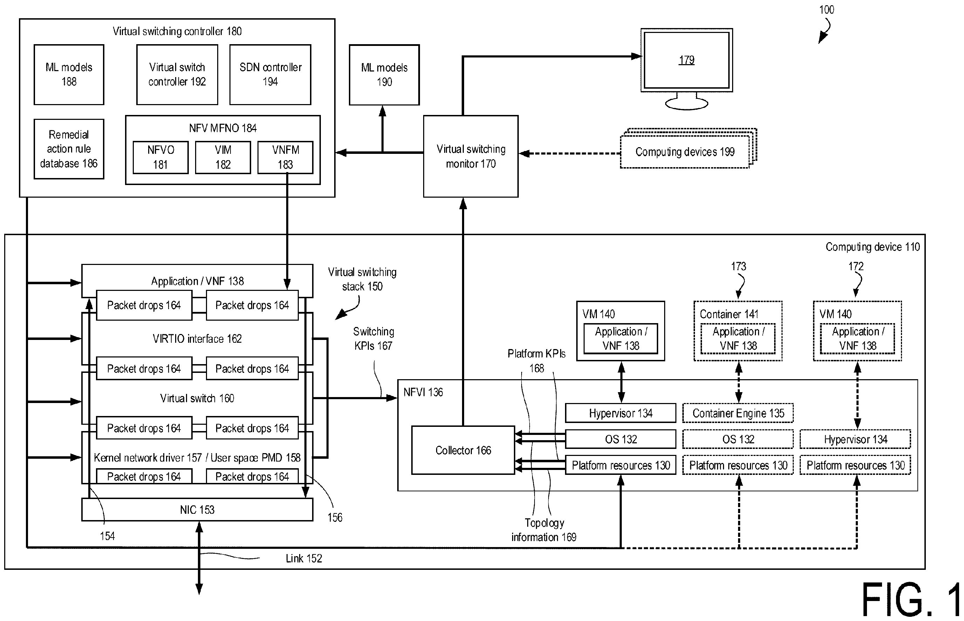

FIG. 1 illustrates a block diagram of an exemplary computing system for identifying and remediating performance issues in a virtual computing environment. The system 100 comprises a computing device 110, a virtual switching monitor 170, and a virtual switching controller 180. The computing system 100 can comprise one or more computing systems or devices described or referenced herein. The computing device 110 can similarly be any computing system or device described or referenced herein. The computing device 110 comprises platform resources 130 upon which an operating system 132 operates. A hypervisor 134 operates on the operating system 132 and hosts a virtual machine (VM) 140. The VM 140 hosts an application 138. In embodiments where the virtual computing environment is an NFV (network functional virtualization) environment, the application 138 can be a VNF (virtual network function), and the platform resources 130, the operating system 132, and the hypervisor 134, can together define an NFVI (network function virtualization infrastructure) 136.

The platform resources 130 comprise one or more processors (such as CPUs (central processing units) or GPUs (graphics processing units)) and can include additional computing device components such as memories, storage units, I/O (input/output) controllers, and other computing device resources or components described or referenced herein. The platform resources 130 can comprise platform-level components such as voltage regulators and a baseboard management controller (BMC). In one embodiment, the computing device 110 is a server, and the platform resources 130 comprise one or more multi-core server processors. The operating system 132 can be any type of operating system, such as a Windows-based or Linux-based server operating system. In embodiments where the application 138 is a VNF, the VNF can be any virtualized network function, such as a virtualized router, firewall, load balancer, or intrusion detection device.

The computing device 110 further comprises a virtual switching stack 150 that provides network communication to the application 138. The virtual switching stack 150 delivers packets received over a network link 152 at a NIC (network interface controller) 153 to the application 138 via a receive path 154 and delivers packets from the application 138 to the NIC 153 to be transmitted over the link 152 via a transmit path 156. The virtual switching stack 150 comprises a virtual switch 160 that can be running in kernel or user space. In embodiments where the virtual switch 160 resides in kernel space, it utilizes a kernel network driver 157. In embodiments where the virtual switch 160 resides in user space, such as where the virtual switch utilizes DPDK (data path development kit) technologies to allow for the direct passing of packets between the NIC 153 and the application 138, the virtual switch 160 can utilize a user space PMD (poll mode driver) 158. The virtual switching stack 150 further comprises a VIRTIO interface 162. The VIRTIO interface 162 is an interface that complies with the VIRTIO virtual I/O (input/output) standard that presents emulated devices to virtual machines running on a hypervisor. In other embodiments, the virtual switching stack 150 (and any other embodiment comprising a VIRTIO interface) can comprise a virtual I/O interface other than a VIRTIO implementation.

In embodiments where the application 138 is operating within a container, the virtual switching stack 150 can comprise a container bridge that provides for the routing of packets between containers and between a NIC and multiple containers. In other container environments, containers can communicate without a container bridge by sending packets to an external switch or to a local switch complex that routes packets from one container to another using an external router. In still other container environments, communication between containers is achieved with a veth connections, in which one end of a veth connection is connected to the container and the other end of the veth connection is connected to a bridge in the kernel's (e.g. Linux kernel's) root namespace.

The virtual switch 160 passes packets between the application 138 and the NIC 153 by interfacing with the VIRTIO interface 162. In some embodiments, the virtual switch 160 is an OvS (Open vSwitch) implementation of a virtual switch. In other embodiments, the virtual switch 160 can be a VMware vswitch or a Microsoft Hyper-V internal, external, or private virtual switch. Although the virtual switch 160 is shown as interfacing to the application 138 via the VIRTIO interface 162, in other embodiments, the virtual switch 160 can utilize other interfaces to communicate with the application 138.

Although the virtual switching stack 150 is shown as being separate from other computing device components and resources illustrated in FIG. 1, it is to be understood that the virtual switching stack 150 operates on or as part of these components and resources. For example, in some embodiments, the virtual switch 160 and the VIRTIO interface 162 are part of the hypervisor 134.

The hypervisor 134 is a type-2 or hosted hypervisor as it is running on the operating system 132 of the computing device 110. In some embodiments, the hypervisor 134 can be a type-1 or "bare-metal" hypervisor running directly on the platform resources 130 of the computing system 100 without an intervening operating system layer, as illustrated by the dashed boxes in stack 172. In other embodiments, the application 138 can operate in a container environment. For example, the application 138 can execute within a container 141 that operates on a container engine 135 that in turn executes on the operating system 132, as shown by the dashed boxes in stack 173. In embodiments where the application 138 is an NFV, the application can be a cloud network function (CNF).

As used herein, the terms "operating", "executing", or "running" as they pertain to software or firmware in relation to a system, device, platform, or resource are used interchangeably and can refer to software or firmware stored in one or more computer-readable storage media accessible by the system, device, platform or resource, even though the instructions contained in the software or firmware are not actively being executed by the system, device, platform, or resource.

The technologies described herein can identify and remediate performance issues in the virtual computing environment operating on the computing device 110. These issues can include network performance issues (such as packets being dropped along the receive path 154 and the transmit path 156), platform RAS (reliability, accessibility, and serviceability) errors (such as hardware faults, memory ECC (error correction code) or parity check corrections), and configuration errors. The "packet drop" blocks 164 in the virtual switching stack 150 illustrate where packets can be dropped in the virtual switching stack 150, such as at interfaces between layers in the stack 150 and within individual layers of the stack 150.

Performance issues can be determined from telemetry information available from the platform resources 130, switching stack layers, and other computing components or resources of the computing device 110, such as the operating system 132. One such type of telemetry information is KPIs (key performance indicators). KPIs can be provided by individual layers of the switching stack (switching KPIs) and platform resources (platform KPIs). Another type of telemetry information is topology information that can be provided by the platform resources 130 or other components or resources of the computing device 110.

Switching KPIs that can be made available by the kernel network driver 157 or the user space PMD 158 include: a receive bit rate (which can be made available in, for example, bits or bytes/second), a transmit bit rate (bits or bytes/second), a number of received packets dropped by the driver 157 or 158 (total number of packets dropped, number of packets dropped over a period of time), a number of received bytes, a number of received packets, a number of transmitted packets dropped by the driver 157 or 158 (total number of packets dropped, a number of packets dropped with a period of time), a number of transmitted error packets, a number of transmitted bytes, a number of transmitted packets (total number of packets, number of packets transmitted over a period of time), and a number of packets dropped due to no receive or transmit descriptors available on a host processor.

Additional switching KPIs that can be made available by the kernel network driver 157 or the user space PMD 158 include an error free connection time KPI can indicate an amount of time that the NIC 153 had no MAC (media access layer) or PHY (physical layer) framing errors, such CRC (cyclic redundancy check) and drop errors; an error free transmission time KPI indicating the amount of time that the link 152 to which the NIC 153 is connected has no errors; a network timeout duration KPI indicating an amount of time that network link 152 was down; and a NIC mean time between failures KPI, which can be provided as the sum of times the NIC 153 is operational divided by the number of failures. In some embodiments, these KPIs - error free connection time, error free transmission time, network time duration, and NIC mean time between failures - can be provided by a DPDK or ethernet statistics plugin, such as ethstat.

Switching KPIs that can be made available by the virtual switch 160 include: a transmit packet drops from the VIRTIO interface KPI, which can represent the number of packets transmitted by the VIRTIO interface 162 to the virtual switch 160 and dropped by the virtual switch 160; a transmitted packets dropped internally by the virtual switch 160 due to IP (internet protocol) filters KPI representing the number of packets not transmitted to the NIC 153 because they were filtered by an IP filter of the virtual switch 160; a transmitted packets dropped due to full virtual switch transmit queues KPI, which can represent transmit packet drops due to transmit queues within the virtual switch 160 being full; a transmitted packets dropped due to exhausted virtual switch buffer memory KPI, which can represent transmit packet drops due to buffer memory internal to the virtual switch 160 being full; a transmitted packets dropped due to virtual switch core overload KPI, which can represent transmitted packet drops due to a core upon which the virtual switch is running being fully utilized (e.g., running at 100% utilization); and a transmitted packets dropped due to an unrecognized path or route KPI.

Similar switching KPIs can be made available by the virtual switch 160 for received packets. These KPIs include: a received packet drops to the VIRTIO interface KPI, which represents the number of received packets provided to the VIRTIO interface 162 by the virtual switch 160that were dropped by the virtual switch 160; a received packets dropped internally by the virtual switch 160due to IP filters KPI, which represents the number of received packets not being transmitted to the VIRTIO interface 162 because they were filtered by an IP filter of the virtual switch 160; a received packets dropped due to full virtual switch receive queues KPI, which represents received packet drops due to receive queues within the virtual switch 160 being full; a received packets dropped due to exhausted virtual switch buffer memory KPI, which represents received packet drops due to buffer memory internal to the virtual switch 160 being full; a received packets dropped due to virtual switch core overload KPI, which represents received packet drops due to a core upon which the virtual switch 160 is running being fully utilized (e.g., running at 100% utilization); and a received packet drops due to an unrecognized path or route KPI.

In container embodiments where the switching stack 150 comprises a container bridge, switching KPIs related to transmitted packets include: a transmit packet drops from the container KPI, which represents the number of packets transmitted by the container to the bridge that were dropped by the bridge; a transmitted packets dropped internally by the bridge due to a NAT (network address translator) table KPI, which represents the number of packets not being transmitted to the NIC 153 because they were filtered by a bridge NAT table; a transmitted packets dropped due to full bridge transmit queues KPI, which represents transmit packet drops due to transmit queues with the bridge being full; a transmitted packets dropped due to exhausted bridge buffer memory KPI, which represents transmit packet drops due to buffer memory internal to the bridge being full; a transmitted packets dropped due to bridge core overload KPI, which represent transmit packet drops due a core upon which the bridge is running being fully utilized (e.g., running at 100% utilization); and a transmit packet drops due to an unrecognized path or route KPI.

Similar switching KPIs can be made available by a bridge in a container embodiment for received packets. These KPIs include: a received packet drops to the container KPI, which represents the number of received packets provided to the container by the bridge switch that were dropped by the bridge; a received packets dropped internally by the bridge switch due to a NAT table KPI, which represents the number of received packets not being transmitted to the container because they were filtered by a bridge NAT table; a received packets dropped due to full bridge receive queues KPI, which represents receive packet drops due to receive queues within the bridge being full; a received packets dropped due to exhausted bridge buffer memory KPI, which represents received packet drops due to buffer memory internal to the bridge being full; a received packets dropped due to bridge core overload KPI, which represents received packet drops due a core upon which the bridge is running being fully utilized (e.g., running at 100% utilization); and a received packet drops due to an unrecognized path or route KPI.

In embodiments where the application 138 is operating within a container and container networking is enabled with one or more veth connections, the switching KPIs can comprise one or more veth KPIs.

Switching KPIs that can be provided by the VIRTIO interface 162 include VIRTIO receive error KPIs and VIRTIO transmit error KPIs. The VIRTIO receive error and transmit error KPIs can indicate, for example, whether received packets or transmitted packets have been dropped, respectively, by the VIRTIO interface 162. In one example, VIRTIO receive errors KPIs can include a count of receive packet errors occurring within a reporting period and the VIRTIO transmit error KPIs can include transmit packet errors within a reporting period. Additional switching KPIs include an incoming traffic rate and an outgoing traffic rate, which represent incoming and outgoing traffic rates on the link 152 connected to the NIC 153.

Platform resource KPIs can include: a list of cores with insufficient memory bandwidth, a list of cores with insufficient cache allocation, core utilization KPIs, polling core (cores on which the user space PMD is operating) utilization KPIs, a list of cores and associated applications executing on the individual cores, a list of core threads and applications associated with the individual core threads. a list of cores running at full utilization, a list of cores running at a utilization above a utilization threshold, CPU utilization KPIs, a CPU headroom KPI (a measure of CPU utilization, which could be provided in watts or as a comparison to the CPU's TDP (thermal design power, a processor's power consumption level when operating at its maximum steady state level of operation); and platform RAS error KPIs, which indicate RAS errors on the computing platform. Platform RAS errors include such errors as ECC or parity check corrections, point-to-point processor interconnect healing (e.g., Intel^{®} QPI (Quick Path Interconnect) healing in Intel^{®} multi-core processors), corrected machine check interrupts, cache errors, thermal events, and memory data correction (e.g., DRAM single device data correction (SDDC)). Processor and core utilization KPIs can be provided by the processor. In some embodiments processor performance counters and monitors, such as an Intel^{®} Performance Monitor Unit (PMU), can provide utilization KPIs. In some embodiments, an operating system command can provide platform or processor related KPIs. Such commands include the Linux command turbostat, which provides information about a processor's topology, frequency, idle power-state statistics, temperature, power usage, etc. In DPDK embodiments, power and processor KPIs can be based on information provided by DPDK telemetry plugins. In some embodiments, processor and core KPIs can be provided out of band as a rack-level metric, such as an Intel^{®} Rack Scale Design metric.

Platform resource KPIs can additionally include one or more of the following utilization KPIs: an application acceleration utilization KPI, a queue manager accelerator utilization KPI, a last-level cache (LLC) utilization KPI, a memory bandwidth utilization KPI, a CPU configuration utilization KPI, and a PCIe (Peripheral Component Interconnect Express) utilization KPI. The application accelerator utilization KPI can reflect an amount of utilization of an application acceleration tool or resource (e.g., acceleration and/or compression of specific types of workloads, such as cryptographic workloads). In some embodiments, an application acceleration utilization KPI can represent an amount of utilization of an Intel^{®} Quick Assist Technology (QAT) tool or resource, such as an Intel^{®} QAT hardware accelerator. The queue manager accelerator utilization KPI can reflect an amount of utilization of a queue management accelerator for managing shared or dedicated queues to exchange data and information between threads and processes. In some embodiments, a queue manager accelerator utilization KPI can represent an amount of utilization of an Intel^{®} Hardware Queue Manager (HQM). Last-level cache utilization and memory bandwidth utilization KPIs can represent utilization levels of these resources by, for example, applications, virtual machines, and containers. In some embodiments, LLC utilization and memory bandwidth utilization KPIs are provided by Intel^{®} Resource Directory Technology. The CPU configuration utilization KPI can be a utilization metric related to technology enabling a CPU to run in an increased base frequency or a higher "turbo" frequency. In some embodiments, the CPU configuration utilization KPI is a utilization metric related to Intel^{®} Speed Select Technology. The PCIe utilization KPI can be a utilization metric related to PCIe technology, such as an amount of utilization of a PCIe link.

Further platform KPIs can be made available, including: a power headroom KPI representing an available amount of power or thermal headroom based on current power consumption levels; a temperature KPI, which can be a platform, processor or other computing device component temperature; core frequency KPIs, which can comprise the frequency that each core is operating at in hertz, the frequency that each core is operating at compared to its maximum rated frequency (e.g., maximum "turbo" frequency for Intel^{®} processors), the frequency that each core is operating at compared to its base frequency (e.g., P1 frequency for Intel^{®} processors), or each core's power state (e.g., p-state for Intel^{®} processors); uncore frequency KPIs, which can represent the frequency of a non-core processor component in hertz or relative to a base or maximum frequency (although the term "uncore" typically refers to Intel^{®} microprocessors, as used herein, the term "uncore" also refers to non-Intel^{®} microprocessors); an instruction set KPI, which can indicate which instruction set or sets supported by a core (such as an expanded instruction set) or whether a core supports a particular instruction set expansion (e.g., the Advanced Vector Extensions (AVX) on Intel^{®} microprocessors); core sleep detection KPIs, which can be provided, on a per core basis, as the length of time within a reporting period or a percentage of the reporting period that a core is asleep; and core idle detection KPIs, which can be provided, on a per core basis, as a length of time within a reporting period or a percentage of the reporting period that a core is in an idle state.

Platform resource KPIs can additionally include one or more of the following error related KPIs: a processor availability KPI, a processor error time KPI, a memory availability KPI, and a memory error time KPI. The processor availability KPI can be provided as a length of time or a percentage of time in a reporting period that a processor had zero errors. In some embodiments, a processor availability KPI can indicate interconnect errors such as platform-level (e.g., PCIe) interconnection errors or processor point-to-point (e.g., Intel^{®} QPI) interconnect errors. The processor error time KPI can be provided as a length of time or a percentage of time in a reporting period that a processor had errors. The memory availability KPI can be provided as a length of time or a percentage of time in a reporting period that a memory had zero errors. The memory error time KPI can be provided as a length of time or a percentage of time in a reporting period that a memory had errors. These error-related platform resource KPIs can be provided by various components or technologies integrated into a processor or a platform, such as PCIe controllers or Intel^{®} Machine Check Architecture, Quick Assist Technology, and Quick Point Interconnect controllers.

Additional platform resource KPIs include CPU power KPIs, core power KPIs, workload power KPIs, and platform power KPIs. Core power KPIs can comprise power state information such as the amount of time a list of cores spend in a power state in a reporting power or the percentage that each core spends in a power state over the reporting period. Platform power KPIs can comprise a platform wall power (e.g., the power being supplied to the platform) metric. Workload power KPIs can comprise a measure of the amount of power consumed by a workload.

Additional KPIs comprise information generated by an inband network telemetry framework, wherein a networking data plane generates reports or other information related to the flow of packets through a network. Components that can generate inband network telemetry include applications, hypervisors, NICs, and switching stack layers. In some embodiments, KPIs include information included in inband network telemetry reports, such as drop reports generated from drop events and queue congestion reports generated from queue-related events.

The KPIs listed above can be provided in various measures, depending on the KPIs. For example, KPIs related to packet drops can be provided in a total number of packets dropped or a percentage of total transmitted or received packets that were dropped, and time-related KPIs can be provided in an amount of time or a percentage of a reporting time period. For KPIs relating to a list of cores, cores can be identified by a core identifier. Utilization KPIs (CPU utilization, core utilization, QAT utilization, etc.) can be provided as, for example, by a percentage of full utilization or utilization in an amount of power consumed in watts. Also, processor and core KPIs can be for logical or physical processors or cores. KPIs relating to frequency can be provided as an absolute frequency in hertz, or a percentage of a characteristic frequency of a component (e.g., base frequency, maximum turbo frequency). KPIs related to power consumption be provided as an absolute power number in watts or a relative power measure (e.g., current power consumption relative to a characteristic power level (TDP, maximum turbo power)).

In some embodiments, platform KPIs can be generated by system statistics daeman collectd plugins (e.g., turbostat, CPU, CPUFreq, DPDK_telemetry, Open vSwitch-related plugins (e.g., ovs_stats, ovs_events), python (which allows for the collection of user-selected telemetry), ethstat). In some embodiments, temperature and other platform KPIs can be made available by a baseboard management control (BMC). As discussed earlier, platform resource KPIs can be provided by various components or technologies integrated into a processor, such as PCIe controllers or Intel^{®} Machine Check Architecture (MCA), Quick Assist Technology, and Quick Point Interconnect controllers. In some embodiments, switching and platform KPIs and topology information can be provided by various tools and processes, such as kernel tools (such as lspci, ltopo, dmidecode, and ethtool), DPDK extended statistics, OvS utilities (such as ovs-vsctl and ovs-ofctl), operating system utilities (e.g., the Linux dropwatch utility), and orchestration utilities.

Topology information can comprise the number of CPUs, the number of cores, the number of sockets, and the number of logical CPUs associated with each core. Topology information can further include a CPU identifier, core identifiers, a socket identifier, and a NUMA (non-uniform memory addressing) node identifier for each CPU, and a list of NUMA node identifiers associated with the CPUs on a system. In some embodiments, topology information can be provided by operating system commands, such as NumCPUs, NumCores, NumSockets, CPUsPerCore, CPUInfo, CPUDetails, and NUMANodes.

A collector 166 collects telemetry information from components of the computing device 110 and sends the collected telemetry information to the virtual switching monitor 170. The telemetry information provided by the collector 166 comprises switching KPIs 167 provided by layers of the switching stack 150, along with platform KPIs 168 and topology information 169 provided by the platform resources 130 and the operating system 132. The switching KPIs 167 are shown in FIG. 1 as coming from the switching stack 150, but these KPIs can be generated by the operating system 132, the hypervisor 134, or in container embodiments, the container engine 135. In embodiments where the virtual switch 160 is running in the kernel, some switching stack KPIs can be provided by user space interfaces exposed by the kernel mode virtual switch 160. The collector 166 can send collected telemetry information to the virtual switching monitor 170 as it is received, periodically, upon request by the virtual switching monitor 170, or on other bases.

The virtual switching monitor 170 can determine the presence of performance issues at the computing device 110 based on the telemetry information received from the collector 166 and/or information derived by the virtual switching monitor 170 based on the received telemetry information. In some embodiments, the information derived from the telemetry information includes the presence of errors at any of the layers in the virtual switching stack 150 and whether errors at an individual switching layer occur along the transmit path 156 and/or the receiving path 154 of the virtual switching stack 150.

Information derived from the telemetry information received from the collector 166 can include additional information, such as resource trends. One such resource trend can indicate whether a resource or platform of the computing device 110 is failing or about to fail. Resource trend information could comprise, for example, a rate of increase in packet drops by a virtual switching layer, a rate of increase in errors by a platform resource, a reduction in the transmitted or received bit rate by a virtual switching stack layer, or a rate of increase in the utilization of a platform resource.

The virtual switching monitor 170 can determine that the kernel network driver 157 or user space PMD 158 is dropping packets or is otherwise exhibiting a performance issue if, for example, KPIs relating to the number of dropped received and transmitted packets is greater than zero, if KPIs related to the number of received error packets is greater zero, or if KPIs relating to the number of transmit packet errors is greater than zero. The virtual switching monitor 170 can also determine that the kernel network driver 157 or user space PMD 158 is dropping packets or is otherwise exhibiting a performance issue if, for example, an error free connection time, an error free transmission time, a network timeout duration, a NIC mean time between failures, a transmission bit rate, or a received bit rate is above a threshold value associated with any of these metrics.

Similarly, the virtual switching monitor 170 can determine that the virtual switch 160 is dropping packets or otherwise exhibiting a performance issue if, for example, KPIs indicate that transmitted packets received from the VIRTIO interface 162 have been dropped by the virtual switch 160, transmitted packets have been dropped due to internal IP filters of the virtual switch 160, transmitted packets have been dropped due to receive queues of the virtual switch 160being full, transmitted packets have been dropped due to exhaustion of virtual switch buffer memory, transmitted packets have been dropped due to cores running the virtual switch 160being overloaded, or transmitted packets have been dropped due to an unrecognized path or route.

The virtual switching monitor 170 can also determine that the virtual switch 160 is dropping packets or otherwise exhibiting performance issues if, for example, KPIs indicate that received packets sent to the VIRTIO interface 162 have been dropped by the virtual switch 160, received packets have been dropped due to internal IP filters of the virtual switch 160, received packets have been dropped due to transmit queues of the virtual switch 160 being full, received packets have been dropped due to exhaustion of virtual switch buffer memory, received packets have been dropped due to cores running the virtual switch 160 being overloaded, or received packets have been dropped due to an unrecognized path route.

In container embodiments, the virtual switching monitor 170 can determine that a container bridge is dropping packets or otherwise exhibiting performance issues if, for example, KPIs indicate that packets transmitted from the container have been dropped by the container bridge, transmitted packets have been dropped internally by a NAT table internal to the bridge, transmitted packets have been dropped due to receive queues of the container bridge being full, transmitted packets have been dropped due to exhaustion of container bridge buffer memory, transmitted packets have been dropped due to cores running the container bridge being overloaded, or that transmitted packets are being dropped due to an unrecognized path or route KPI.

The virtual switching monitor 170 can also determine that a container bridge is dropping packets or otherwise exhibiting performance issues if, for example, KPIs indicate that received packets delivered to the container have been dropped by the container bridge, received packets have been dropped internally by a NAT table internal to the bridge, received packets have been dropped due to transmit queues of the container bridge being full, received packets have been dropped due to exhaustion of container bridge buffer memory, received packets have been dropped due to cores running the container bridge being overloaded, or that received packets are being dropped due to an unrecognized path or route KPI.

The virtual switching monitor 170 can determine that the VIRTIO interface 162 is dropping packets or otherwise exhibiting performance issues if, for example, switching KPIs indicate that there are VIRTIO receive errors or VIRTIO transmit errors.

The virtual switching monitor 170 can generate one or more reports on the virtual computing environment deployed at the computing device 110. A report generated by the virtual switching monitor 170 can contain any of the telemetry information received from the collector 166 and information derived from the telemetry information received from the collector 166 and generated by the virtual switching monitor 170. In some embodiments, the virtual switching monitor 170 can generate a topology report that comprises a list of computing platform components, their characteristics, and the relationships between them. Computing platform components listed in a report can comprise processors, cores, threads, NICs, virtual switches, virtual machines, applications, containers, container engines, hypervisors, as well as any other hardware, firmware, or software components. Platform component relationships included in the report can include relationships such as NIC queue to application mapping, virtual switch PMD thread to core mapping, application to virtual machine mapping, virtual machine to socket mapping, to name a few.

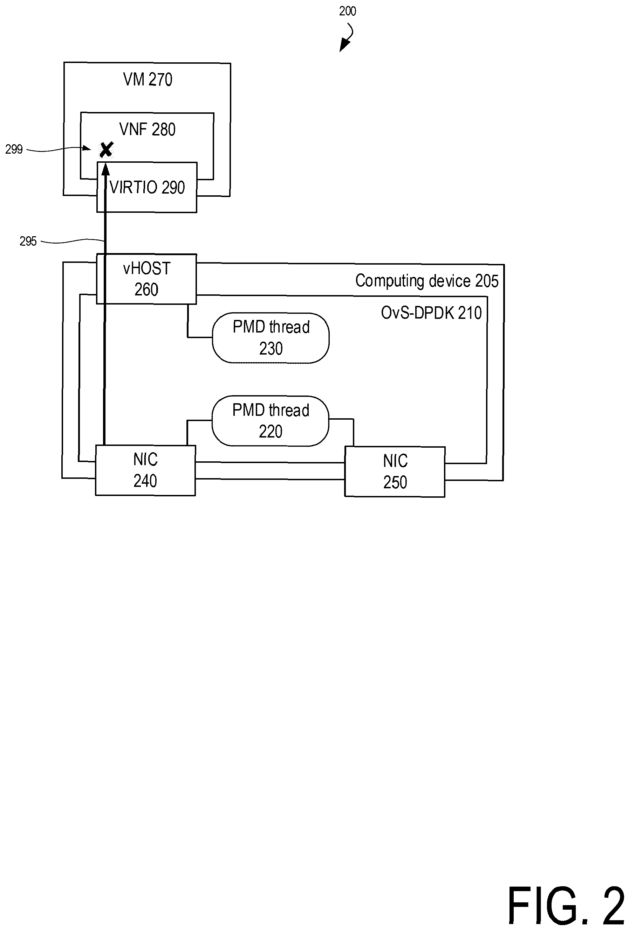

In some embodiments, a report generated by the virtual switching monitor 170 can comprise a graphical topology view to aid a user in understanding the arrangement of computing platform components. FIG. 2 illustrates an exemplary graphical topology view. The graphical topology view 200 illustrates a topology of a computing device 205. The graphical topology view 200 comprises an OvS-DPDK (Open vSwitch running DPDK) instance 210 having a first poll mode driver (PMD) thread 220 and a second PMD thread 230. The first PMD thread 220 services ports of NICs 240 and 250 and the second PMD thread 230 services a port of a virtual host (vHost) 260, such as a hypervisor. A virtual machine (VM) 270 is hosted on the computing device 205 and a VNF 280 is running on the VM 270. The VM 270 communicates to the vHost 260 via a VIRTIO interface 290. A flow 295 has been configured to route traffic between the NIC 240 and the VNF 280. In some embodiments, a report generated by the virtual switching monitor 170, such as the graphical topology view 200, can be presented on a display 179 local or remote to the computing device on which the virtual switching monitor 170 is running. A graphical topology view can include any number of components in a computing device.

Returning to FIG. 1, the virtual switching monitor 170 provides information derived from the telemetry information received from the collector 166 to the virtual switching controller 180. The virtual switching monitor 170 can also send to the virtual switching controller 180 at least a portion of the telemetry information received from the collector 166.

The virtual switching controller 180 utilizes the information provided to it by the virtual switching monitor 170 to determine one or more remedial actions that can be taken at the computing device 110 to remedy a performance issue. Examples of remedial actions that can be taken include moving an application to another socket or computing device, load balancing traffic away from a congested route through a virtual switch stack, reconfiguring an IP table of a virtual switch or a NAT table of a container bridge, increasing the number of cores a virtual switch or application is running on, scaling up the number of instances of an application, restarting an application, restarting or scaling up a VNF, enabling a high-performance mode for a core, moving a NIC from one socket to another, or migrating a virtual machine to another core.

In some embodiments, the virtual switching controller 180 determines remedial actions that can be taken by referencing a remedial action rule database 186. In some embodiments, a remedial action rule stored in the database 186 comprises one or more remedial actions that can be taken to remedy a performance issue and one or more remedial action criteria that, if satisfied by the information provided to the virtual switching controller 180 by the virtual switching monitor 170, represents the presence of the performance issue. In some embodiments, the remedial action rules can take the form {criterion 1 ... criterion N, remedial action 1 ... remedial action N}, where criterion 1 through N define the criteria that the information provided to the virtual switching controller 180 by the virtual switching monitor 170 needs to satisfy to indicate the presence of a performance issue, and remedial actions 1 through N are remedial actions that can be taken at the computing device 110 to remedy the performance issue. In some embodiments, the virtual switching controller 180 can comprise one or more machine learning (ML) models 188 to determine one or more remedial actions that can be taken. The ML models 188 can be trained using a training set of computing platform telemetry data (switching KPIs, platform KPIs, topology information), and a deployed inference model 188 can indicate whether one or more remedial actions are to be taken. The indication can be a binary indication (the one or more remedial actions should or should not be taken) or a numerical indication (a "score") indicating the likelihood that the one or more remedial actions associated with the model will remedy a performance issue. Information provided by the virtual switching monitor 170 can be used as training data to train offline ML models 190 that can be later deployed into an operational environment.

In some embodiments, a virtual switching controller 180 can identify more than one remedial action that can be taken to remedy a performance issue. In some embodiments, input provided by a user can be used to determine which of several identified remedial actions is to be taken. User input can be received at any input device communicatively coupled to the virtual switching controller 180, such as the local or remote display 179, which could be part of or communicatively coupled to any type of computing device described or referenced herein. For example, one or more remedial actions can be presented on a network engineer's laptop and the engineer can select one or more remedial actions to be taken by the computing system 100 to remedy the performance issue.

In some embodiments, a user is presented with a graphical topology view showing a topology of the computing system (such as is shown in FIG. 2), information indicating one or more performance issues identified by the system and one or more remedial actions that can be taken to remedy the one or more performance issues. The presented remedial actions are selectable by the user, and after a user makes their selection, the virtual switching controller 180 causes the selected one or more remedial actions to be taken.

In some embodiments, the remedial actions can be caused to be taken automatically by the virtual switching controller 180. In some embodiments, a remedial action can have associated enforcement information indicating that the remedial action is to be taken subject to user approval, taken automatically without user approval, or taken automatically after additional criteria are met. The enforcement information for a remedial action can be user-configurable and a user can adjust whether a remedial action is to be taken automatically without conditions, automatically subject to one or more conditions, or requires user confirmation. For conditional remedial actions, the enforcement information can indicate one or more criteria to be satisfied before the remedial action is automatically taken. Examples of such criteria include that a performance issue needs to persist for a threshold period before the action is taken or that the performance issue meets or exceeds a severity level. In some embodiments, a performance issue can have an associated severity level as defined by the ITU (International Telecommunication Union) - warning, minor, major, or critical. The ITU severity levels depend on factors such as the number of services (e.g., containers, VNFs) impacted, the number of subscribers impacted, and the type of services (e.g., best-effort or critical) impacted. Thus, enforcement information can implement a sliding scale of enforcement, with providing alerts and reports without automatic enforcement and requiring manual confirmation for a remedial action to be taken at one end of the scale and fully automated implementation of remedial actions at the other.

In some embodiments, the virtual switching controller 180 can identify multiple remedial actions that can be taken. For example, multiple remedial action rules in the database 186 can be satisfied with the information provided to the virtual switching controller 180 by the virtual switching monitor 170. In some embodiments, remedial action rules can comprise severity information (e.g., an ITU severity level) indicating the severity of the performance issue associated with the rule and a remedial action associated with the performance issue having the highest severity can be taken. In some embodiments, if multiple performance issues are identified, the virtual switching controller 180 can determine which remedial action is to be taken based on the severity of a detection performance issue, the frequency at which a performance issue is occurring, how long a performance issue has persisted, or a combination of these factors.

Various components of the virtual switching controller 180 can cause a remedial action to be taken. In embodiments where the computing system 100 is operating an NFV environment, the virtual switching controller 180 can comprise an NFVO (NFV orchestrator) 181, a VIM (virtualized infrastructure manager) 182, and a VNFM (virtual networks function manager) 183. Together, the NFVO 181, VIM 182, and VNFM 183 can be part of an NFV-MANO (management and orchestration) framework 184. The NFVO 181 performs resource (storage, network, compute) orchestration and network service orchestration. In some embodiments, the NFVO can be an ONAP (Open Network Automation Platform), OSM (Open Source MANO), or VMware vCenter implementation. The VIM 182 controls and manages resources of the NFVI 136. It keeps an inventory of the allocation of virtual resources to physical resources, which allows for the orchestration of the allocation, upgrade, release, and reclamation of NFVI resources. In some embodiments, the VIM 182 can be an OpenStack, Kubernetes, or VMware vSphere implementation. The VNFM 183 manages the lifecycle of VNFs, handling such operations such as VNF instantiation, scaling, update, and termination. By automatically detecting performance issues in a deployed NFV environment and automatically taking remedial actions to remedy the detected performance issues, the technologies described herein can provide high availability (HA) NFV solutions.

A virtual switch controller 192 can configure the virtual switch 160 to control the flow of traffic to and from virtual machines being hosted on the computing device 110. The virtual switch controller 192 can also control the scaling of virtual switches, scaling up the number of cores on which a virtual switch is running if switching KPIs indicate that a core currently running the virtual switch is overloaded. An SDN (software defined networking) controller 194 can program virtual switch routing tables and control the flow of information between VNFs deployed to the computing device 110. The SDN controller 194 is shown logically as a single unit but can be distributed across multiple components in the computing system 100.

In the embodiment illustrated in FIG. 1, the virtual switching monitor 170 and the virtual switching controller 180 are shown as being external to the computing device 110. As such, they operate on different computing devices than the computing device 110. In some embodiments, the virtual switching controller 180 and virtual switching monitor 170 can operate on the same computing device and in other embodiments, they can operate on different computing devices. Similarly, the components of the virtual switching controller 180 can operate on the same computing device or across multiple computing devices. For example, the NFVO 181, VIM 182, and VNFM 183 can operate on a computing device dedicated to managing NFV operations for an entity, such as a network services provider and the SDN controller 194 can run on another computing device. In other embodiments, the NFVO, 181, VIM 182, VNFM 183, and SDN controller 194 can each operate on virtual machines deployed to separate computing devices separate from each other.

The following are examples of remedial actions that can be taken at the computing device 110 to remedy performance issues.

In a first example, a remedial action comprising moving the application 138 from the computing device 110 to a different computing device is taken if a user space PMD receive packet drop rate is greater than zero and one or more platform RAS error KPIs indicate the presence of platform RAS errors on the computing device 110. In embodiments where the application 138 is a VNF, this remedial action can be taken by the NFVO 181. In some embodiments, more important or critical VNFs can be moved to another computing device before less important or non-critical VNFs are moved. The NFVO 181 can maintain a record of which VNFs deployed by the NFVO 181 are important or critical.

In a second example, a remedial action comprising moving at least a portion of the traffic flowing through the virtual switching stack 150 away from a first port of the computing device 110 is taken if a user space PMD receive packet drop rate is greater than zero and a CPU utilization KPI indicates that the CPU utilization is substantially 100%, indicating a congested route. The traffic can be moved away from the congested route to a different port on the computing device 110 or another computing device. In some embodiments, the SDN controller 194 can cause at least a portion of the traffic to move away from the congested route.

In a third example, a remedial action comprising reconfiguring an IP table of the virtual switch 160 is taken if a virtual switch IP filter packet KPI indicates that a percentage of the incoming traffic being dropped by an IP filter of the virtual switch 160 exceeds a threshold percentage. In some embodiments, the incoming traffic threshold percentage is 100%. In some embodiments, the SDN controller 194 can cause one or more IP tables of the virtual switch 160 to be reconfigured with correct routes.

In a fourth example, a remedial action comprising increasing the number of cores upon which the virtual switch 160 is running is taken if a virtual switch IP filter packet drop KPI indicates that substantially all of the incoming packets are being dropped by IP filters of the virtual switch 160. The virtual switch controller 192 causes the number of cores running the virtual switch 160 to increase.

In a fifth example, a remedial action comprising restarting the application 138 is taken if the switching KPIs indicate that the VIRTIO interface 162 is dropping transmitted packets and that there are no errors associated with the layers below the VIRTIO interface 162 in the virtual switching stack 150. In embodiments where the application 138 is a VNF, the VNFM 183 can cause the application 138 to be restarted.

In a sixth example, a remedial action comprising starting one or more additional instances of the application 138 is taken if the switching KPIs indicate that the VIRTIO interface 162 is dropping received packets and that there are no errors associated with the layers below the VIRTIO interface 162 in the virtual switching stack 150. In embodiments where the application 138 is a VNF, the VNFM 183 can scale up the number of VNF 138 instances to handle the additional traffic.

In a seventh example, a remedial action comprising reducing traffic to the application 138 and/or steering traffic away from the application 138 is taken if the switching KPIs indicate that there are errors along the receive path 154 and the errors associated with the VIRTIO interface 162 occurred before the errors associated with the one or more layers below the VIRTIO interface 162. In some embodiments, the SDN controller 194 can cause traffic to be steered away from the application. In embodiments where the application 138 is a VNF, the VNFM 183 can reduce traffic to the VNF 138.

In an eighth example, a remedial action comprising initiating a resiliency or redundancy failover strategy is taken in response to determining that the switching KPIs indicate that transmitted and received packets are being dropped by more than one layer of the virtual switching stack 150 and that the platform KPIs indicate the presence of CPU or memory errors. In embodiments where the application 138 is a VNF, the VNFM 183 can implement the resiliency or redundancy failover strategy. One example of a redundancy failover strategy comprises routing traffic to the application 138 to a standby application running the same network service as the application 138 on another computing device. One example of a resiliency failover strategy comprises redistributing traffic to the application 138 to multiple other applications running the same network service as the application 138. In a second example of a resiliency failover strategy, the virtual switch 160 is restarted or reset.

In some embodiments, the computing system 100 can identify performance issues occurring on multiple computing devices and take appropriate remedial actions. For example, the virtual switching monitor 170 can receive telemetry information from one or more additional computing devices 199. The virtual switching monitor 170 can identify performance issues occurring in the additional computing devices 199 and generate reports for the additional computing devices 199. The virtual switching monitor 170 can determine which layers in virtual switching stacks operating on the additional computing devices 199 are dropping packets, and deliver that information, along with telemetry information for the additional computing devices 199 and information derived from the telemetry information to the virtual switching controller 180. The virtual switching controller 180 can identify one or remedial actions to remedy the performance issues occurring on the additional computing devices 199 and cause at least one of the remedial actions to be taken.

In some embodiments, the detection and remediation of virtual environment performance issues can be scaled up through the up-leveling of reports. For example, a virtual switching controller responsible for generating reports for one computing device can provide telemetry information and information derived from the telemetry information for the one computing device to an entity responsible for aggregating such information for a large number of computing devices. Such an entity could be an upper-level virtual switching controller, SDN controller, NFV management and orchestration framework element, or virtual switching controller.

In addition to illustrating a graphical topology view, FIG. 2 also illustrates a first exemplary scenario in which the technologies disclosed herein can be utilized to detect a dynamic performance issue. Because the first PMD thread 220 services the ports of NICs 240 and 250, when the NIC 250 is handling a high level of traffic, the first PMD thread 220 has fewer cycles to poll NIC 240 and deliver packets to the VM 270. This can result in packets being dropped before they reach the VNF 280, as indicated by an "X" 299. Using the knowledge of the topology of the computing platform, the virtual switching monitor 170 can attribute the VNF packet drops (as indicated by switching KPIs) to the overloaded first PMD thread 220 due to the increased traffic being handled by the NIC 250. A virtual switching controller can identify one or more remedial action that can be taken, such as enabling a high-performance mode on the core on which the first PMD thread 220 is operating, reconfiguring the PMD threads 220 and 230 such that the NIC 250 is operating on its own thread so that its performance no longer impacts the VNF 280, or adding a core to run the virtual switch 210 such that all ports have a dedicated polling thread.

In some embodiments, a remedial action can be a temporary action that is reversed after the situation creating the performance issue is no longer present. For example, in the scenario illustrated in FIG. 2, if the taken remedial action is to enable a high-performance mode on the core on which PMD thread 220 is operating, the high-performance mode can be disabled once the incoming traffic to the NIC 250 drops below a threshold level.

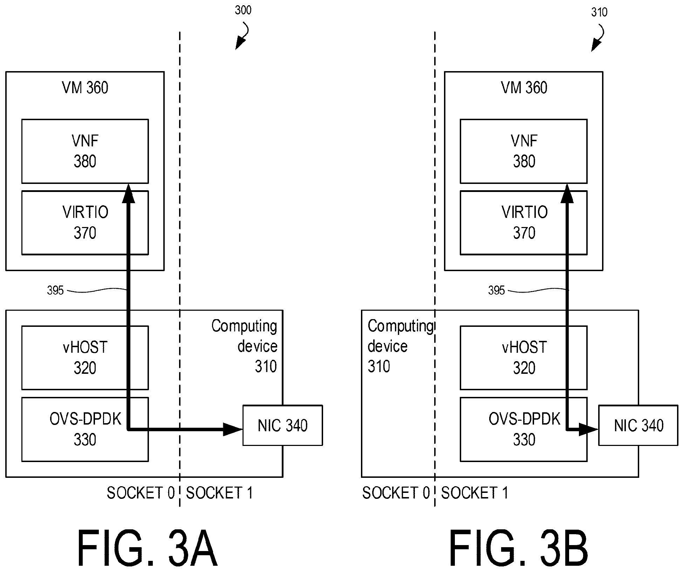

FIGS. 3A & 3B illustrate a second exemplary scenario in which the technologies disclosed herein can be utilized to remedy an initial misconfiguration issue. FIG. 3A illustrates a topology 300 of a computing device 310 on which a virtual host (vhost) 320 and an OvS-DPDK instance 330 are operating and on which a NIC 340 is located. The virtual host 320 is hosting a virtual machine 360 that has a VIRTIO interface 370 and on which a VNF 380 is running. Traffic is intended to flow along a route 395 from the NIC 340 to the VM 360, but due to an initial misconfiguration error, the NIC 340 is configured on socket 1 of the device 310 and the virtual host 320, the OvS-DPDK instance 330, and the VM 360 are configured on socket 0. FIG 3B illustrates a topology 305 in which the misconfiguration error of FIG. 3A has been corrected. Based on the telemetry information generated by the computing device 310, a virtual switching monitor and a virtual switch controller have identified the NIC-socket misconfiguration and caused the virtual host 320, the OvS-DPDK 330 instance, the virtual machine 360, the VIRTIO interface 370, and the VNF 380 to be moved to the same socket as the NIC 340. The misconfiguration error could have been identified based on KPIs indicating that packets were to be delivered from the NIC 340 to the virtual machine 360 along the route 395 and determining that the two components were located on different sockets.

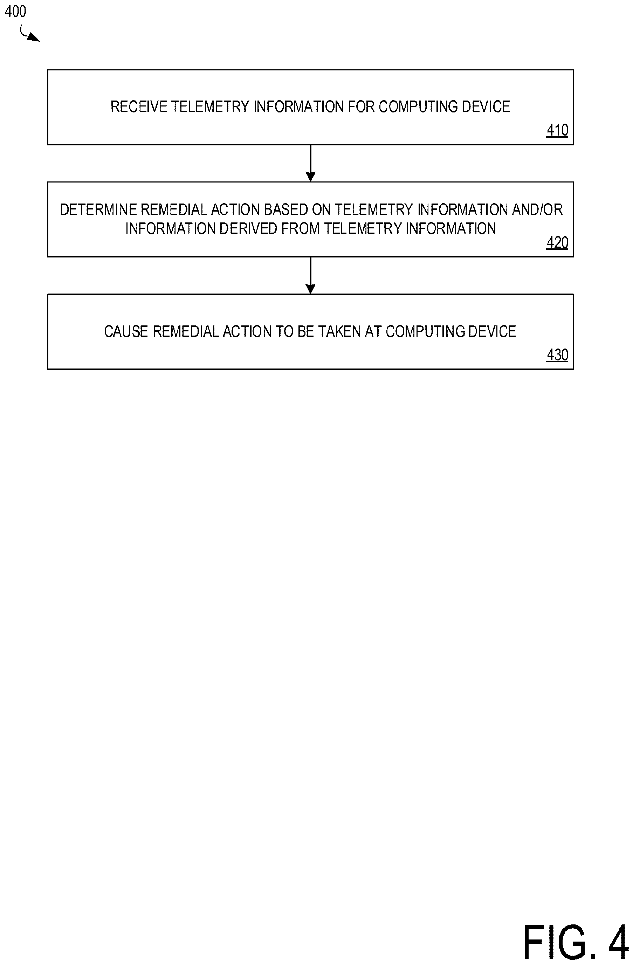

FIG. 4 is a flowchart of an exemplary method of detecting and remediating performance issues in a computing system. The method 400 can be performed by, for example, a virtual switching monitor and a virtual switching controller operating on a server. At 410, telemetry information for a computing device is received. At 420, a remedial action based on the telemetry information and/or information derived from the telemetry information is determined. At 430, the remedial action is caused to be taken at the computing device. The telemetry information comprises at least one of one or more switching KPIs (key performance indicators) for a virtual switching stack providing network communication to an application, one or more platform KPIs for the computing device, or topology information for the computing device. The application and the virtual switching stack are executing on the computing device. In other embodiments, the method 400 can comprise actions in addition to those shown in FIG. 4.

The technologies, techniques, and embodiments described herein can be performed by any of a variety of computing devices, including mobile devices (e.g., smartphones, handheld computers, tablet computers, laptop computers, media players, portable gaming consoles, cameras and video recorders), non-mobile devices (e.g., desktop computers, servers, stationary gaming consoles, set-top boxes, smart televisions) and embedded devices (e.g., devices incorporated into a vehicle, home or place of business). As used herein, the term "computing devices" includes computing systems and includes devices comprising multiple discrete physical components. In some embodiments, the computing devices are located in a data center, such as an enterprise data center (e.g., a data center owned and operated by a company and typically located on company premises), managed services data center (e.g., a data center managed by a third party on behalf of a company), a colocated data center (e.g., a data center in which data center infrastructure is provided by the data center host and a company provides and manages their own data center components (servers, etc.)), cloud data center (e.g., a data center operated by a cloud services provider that host companies applications and data), and an edge data center (e.g., a data center, typically having a smaller footprint that other data center types, located close to the geographic area that it serves).

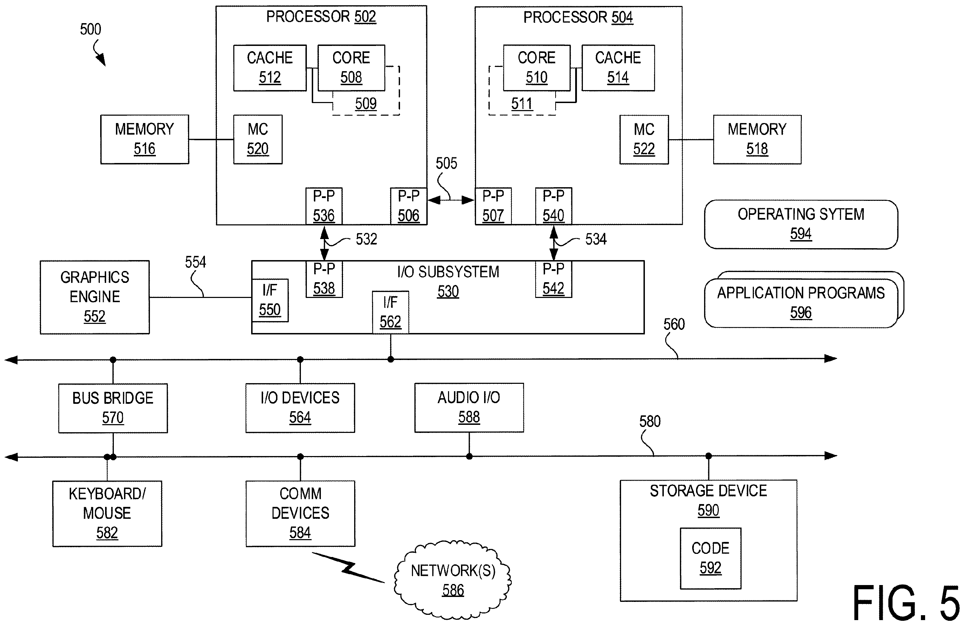

FIG. 5 is a block diagram of an exemplary computing device 500 in which technologies described herein may be implemented. Generally, components shown in FIG. 5 can communicate with other shown components, although not all connections are shown, for ease of illustration. The device 500 is a multiprocessor system comprising a first processor 502 and a second processor 504 and is illustrated as comprising point-to-point (P-P) interconnects. For example, a point-to-point (P-P) interface 506 of the processor 502 is coupled to a point-to-point interface 507 of the processor 504 via a point-to-point interconnection 505. It is to be understood that any or all of the point-to-point interconnects illustrated in FIG. 5 can be alternatively implemented as a multi-drop bus, and that any or all buses illustrated in FIG. 5 could be replaced by point-to-point interconnects.

As shown in Figure 5, the processors 502 and 504 are multicore processors. Processor 502 comprises processor cores 508 and 509, and processor 504 comprises processor cores 510 and 511. Processor cores 508-511 can execute computer-executable instructions in a manner similar to that discussed below in connection with FIG. 13, or in other manners.

Processors 502 and 504 further comprise at least one shared cache memory 512 and 514, respectively. The shared caches 512 and 514 can store data (e.g., instructions) utilized by one or more components of the processor, such as the processor cores 508-509 and 510-511. The shared caches 512 and 514 can be part of a memory hierarchy for the device 500. For example, the shared cache 512 can locally store data that is also stored in a memory 516 to allow for faster access to the data by components of the processor 502. In some embodiments, the shared caches 512 and 514 can comprise multiple cache layers, such as level 1 (L1), level 2 (L2), level 3 (L3), level 4 (L4), and/or other caches or cache layers, such as a last level cache (LLC).

Although the device 500 is shown with two processors, the device 500 can comprise any number of processors. Further, a processor can comprise any number of processor cores. A processor can take various forms such as a central processing unit, a controller, a graphics processor, an accelerator (such as a graphics accelerator, digital signal processor (DSP), or AI accelerator)). A processor in a device can be the same as or different from other processors in the device. In some embodiments, the device 500 can comprise one or more processors that are heterogeneous or asymmetric to a first processor, accelerator, FPGA (field programmable gate array), or any other processor. There can be a variety of differences between the processing elements in a system in terms of a spectrum of metrics of merit including architectural, microarchitectural, thermal, power consumption characteristics and the like. These differences can effectively manifest themselves as asymmetry and heterogeneity amongst the processors in a system. In some embodiments, the processors 502 and 504 reside in the same die package.

Processors 502 and 504 further comprise memory controller logic (MC) 520 and 522. As shown in FIG. 5, MCs 520 and 522 control memories 516 and 518 coupled to the processors 502 and 504, respectively. The memories 516 and 518 can comprise various types of memories, such as volatile memory (e.g., dynamic random access memories (DRAM), static random access memory (SRAM)) or non-volatile memory (e.g., flash memory, solid-state drives, chalcogenide-based phase-change non-volatile memories). While MCs 520 and 522 are illustrated as being integrated into the processors 502 and 504, in alternative embodiments, the MCs can be logic external to a processor, and can comprise one or more layers of a memory hierarchy.

Processors 502 and 504 are coupled to an Input/Output (I/O) subsystem 530 via P-P interconnections 532 and 534. The point-to-point interconnection 532 connects a point-to-point interface 536 of the processor 502 with a point-to-point interface 538 of the I/O subsystem 530, and the point-to-point interconnection 534 connects a point-to-point interface 540 of the processor 504 with a point-to-point interface 542 of the I/O subsystem 530. Input/Output subsystem 530 further includes an interface 550 to couple I/O subsystem 530 to a graphics engine 552, which can be a high-performance graphics engine. The I/O subsystem 530 and the graphics engine 552 are coupled via a bus 554. Alternately, the bus 554 could be a point-to-point interconnection.

Input/Output subsystem 530 is further coupled to a first bus 560 via an interface 562. The first bus 560 can be a Peripheral Component Interconnect (PCI) bus, a PCI Express bus, another third generation I/O interconnection bus or any other type of bus.

Various I/O devices 564 can be coupled to the first bus 560. A bus bridge 570 can couple the first bus 560 to a second bus 580. In some embodiments, the second bus 580 can be a low pin count (LPC) bus. Various devices can be coupled to the second bus 580 including, for example, a keyboard/mouse 582, audio I/O devices 588 and a storage device 590, such as a hard disk drive, solid-state drive or other storage device for storing computer-executable instructions (code) 592. The code 592 can comprise computer-executable instructions for performing technologies described herein. Additional components that can be coupled to the second bus 580 include communication device(s) 584, which can provide for communication between the device 500 and one or more wired or wireless networks 586 (e.g. Wi-Fi, cellular or satellite networks) via one or more wired or wireless communication links (e.g., wire, cable, Ethernet connection, radio-frequency (RF) channel, infrared channel, Wi-Fi channel) using one or more communication standards (e.g., IEEE 502.11 standard and its supplements).

The device 500 can comprise removable memory such as flash memory cards (e.g., SD (Secure Digital) cards), memory sticks, Subscriber Identity Module (SIM) cards). The memory in device 500 (including caches 512 and 514, memories 516 and 518 and storage device 590) can store data and/or computer-executable instructions for executing an operating system 594 and application programs 596. Example data includes web pages, text messages, images, sound files, video data, switching KPIs, platform KPIs, and topology information to be sent to and/or received from one or more network servers or other devices by the device 500 via one or more wired or wireless networks, or for use by the device 500. The device 500 can also have access to external memory (not shown) such as external hard drives or cloud-based storage.

The operating system 594 can control the allocation and usage of the components illustrated in FIG. 5 and support one or more application programs 596. The application programs 596 can include common mobile computing device applications (e.g., email applications, calendars, contact managers, web browsers, messaging applications) as well as other computing applications, such as a collector, a virtual switching monitor, or a virtual switching controller.

The device 500 can support various input devices, such as a touchscreen, microphone, monoscopic camera, stereoscopic camera, trackball, touchpad, trackpad, mouse, keyboard, proximity sensor, and one or more output devices, such as one or more speakers or displays. Other possible input and output devices include piezoelectric and other haptic I/O devices. Any of the input or output devices can be internal to, external to or removably attachable with the device 500. External input and output devices can communicate with the device 500 via wired or wireless connections.

In addition, the computing device 500 can provide one or more natural user interfaces (NUIs). For example, the operating system 594 or applications 596 can comprise speech recognition logic as part of a voice user interface that allows a user to operate the device 500 via voice commands. Further, the device 500 can comprise input devices and logic that allows a user to interact with the device 500 via a body, hand or face gestures.

The device 500 can further comprise one or more communication components 584. The components 584 can comprise wireless communication components coupled to one or more antennas to support communication between the device 500 and external devices. The wireless communication components can support various wireless communication protocols and technologies such as Near Field Communication (NFC), IEEE 1002.11 (Wi-Fi) variants, WiMax, Bluetooth, Zigbee, 4G Long Term Evolution (LTE), Code Division Multiplexing Access (CDMA), Universal Mobile Telecommunication System (UMTS) and Global System for Mobile Telecommunication (GSM). In addition, the wireless modems can support communication with one or more cellular networks for data and voice communications within a single cellular network, between cellular networks, or between the mobile computing device and a public switched telephone network (PSTN).

The device 500 can further include at least one input/output port (which can be, for example, a USB, IEEE 1394 (FireWire), Ethernet and/or RS-232 port) comprising physical connectors; a power supply (such as a rechargeable battery); a satellite navigation system receiver, such as a GPS (global positioning system) receiver; a gyroscope; an accelerometer; a proximity sensor; and a compass. A GPS receiver can be coupled to a GPS antenna. The device 500 can further include one or more additional antennas coupled to one or more additional receivers, transmitters and/or transceivers to enable additional functions.

It is to be understood that FIG. 5 illustrates only one exemplary computing device architecture. Computing devices based on alternative architectures can be used to implement technologies described herein. For example, instead of the processors 502 and 504, and the graphics engine 552 being located on discrete integrated circuits, a computing device can comprise a SoC (system-on-a-chip) integrated circuit incorporating multiple processors, a graphics engine and additional components. Further, a computing device can connect elements via bus or point-to-point configurations different from that shown in FIG. 5. Moreover, the illustrated components in FIG. 5 are not required or all-inclusive, as shown components can be removed and other components added in alternative embodiments.

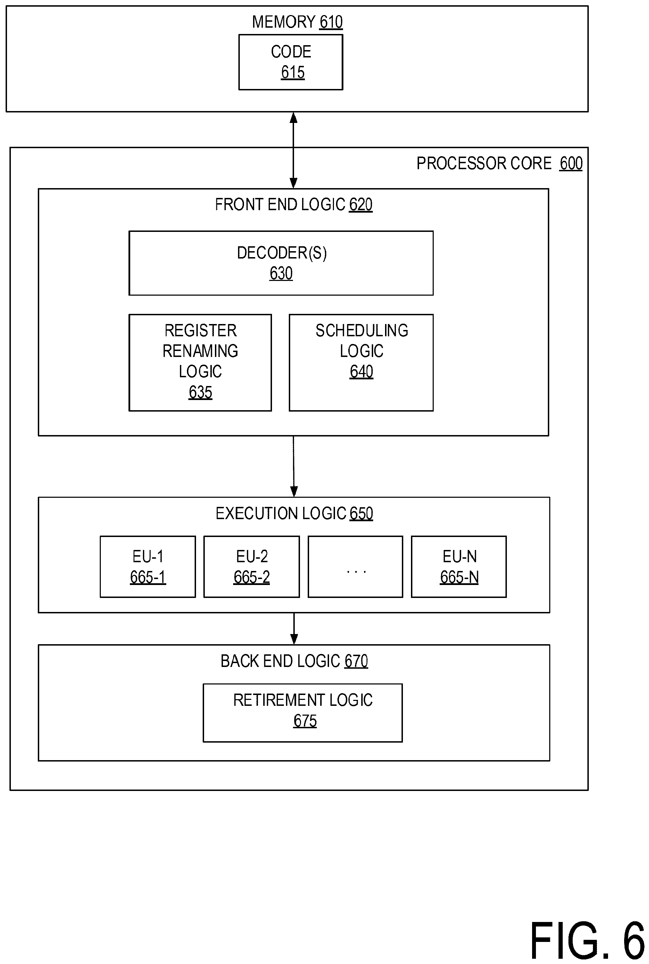

FIG. 6 is a block diagram of an exemplary processor core 600 to execute computer-executable instructions as part of implementing technologies described herein. The processor core 600 can be a core for any type of processor, such as a microprocessor, an embedded processor, a digital signal processor (DSP) or a network processor. The processor core 600 can be a single-threaded core or a multithreaded core in that it may include more than one hardware thread context (or "logical processor") per core.

FIG. 6 also illustrates a memory 610 coupled to the processor 600. The memory 610 can be any memory described herein or any other memory known to those of skill in the art. The memory 610 can store computer-executable instruction 615 (code) executable by the processor core 600.

The processor core comprises front-end logic 620 that receives instructions from the memory 610. An instruction can be processed by one or more decoders 630. The decoder 630 can generate as its output a micro operation such as a fixed width micro operation in a predefined format, or generate other instructions, microinstructions, or control signals, which reflect the original code instruction. The front-end logic 620 further comprises register renaming logic 635 and scheduling logic 640, which generally allocate resources and queues operations corresponding to converting an instruction for execution.

The processor core 600 further comprises execution logic 650, which comprises one or more execution units (EUs) 665-1 through 665-N. Some processor core embodiments can include a number of execution units dedicated to specific functions or sets of functions. Other embodiments can include only one execution unit or one execution unit that can perform a particular function. The execution logic 650 performs the operations specified by code instructions. After completion of execution of the operations specified by the code instructions, back-end logic 670 retires instructions using retirement logic 675. In some embodiments, the processor core 600 allows out of order execution but requires in-order retirement of instructions. Retirement logic 670 can take a variety of forms as known to those of skill in the art (e.g., re-order buffers or the like).

The processor core 600 is transformed during execution of instructions, at least in terms of the output generated by the decoder 630, hardware registers and tables utilized by the register renaming logic 635, and any registers (not shown) modified by the execution logic 650. Although not illustrated in Figure 6, a processor can include other elements on an integrated chip with the processor core 600. For example, a processor may include additional elements such as memory control logic, one or more graphics engines, I/O control logic and/or one or more caches.

As used in any embodiment herein, the term "module" refers to logic that may be implemented in a hardware component or device, software or firmware running on a processor, or a combination thereof, to perform one or more operations consistent with the present disclosure. Software may be embodied as a software package, code, instructions, instruction sets and/or data recorded on non-transitory computer readable storage mediums. Firmware may be embodied as code, instructions or instruction sets and/or data that are hard-coded (e.g., nonvolatile) in memory devices. As used in any embodiment herein, the term "circuitry" can comprise, for example, singly or in any combination, hardwired circuitry, programmable circuitry such as computer processors comprising one or more individual instruction processing cores, state machine circuitry, and/or firmware that stores instructions executed by programmable circuitry. Modules described herein may, collectively or individually, be embodied as circuitry that forms a part of one or more devices. Thus, any of the modules can be implemented as circuitry, such as collector circuitry, etc. A computer device referred to as being programmed to perform a method can be programmed to perform the method via software, hardware, firmware or combinations thereof.

Any of the disclosed methods can be implemented as computer-executable instructions or a computer program product. Such instructions can cause a computer or one or more processors capable of executing computer-executable instructions to perform any of the disclosed methods. Generally, as used herein, the term "computer" refers to any computing device or system described or mentioned herein, or any other computing device. Thus, the term "computer-executable instruction" refers to instructions that can be executed by any computing device described or mentioned herein, or any other computing device.

The computer-executable instructions or computer program products as well as any data created and used during implementation of the disclosed technologies can be stored on one or more tangible or non-transitory computer-readable storage media, such as optical media discs (e.g., DVDs, CDs), volatile memory components (e.g., DRAM, SRAM), or non-volatile memory components (e.g., flash memory, solid state drives, chalcogenide-based phase-change non-volatile memories). Computer-readable storage media can be contained in computer-readable storage devices such as solid-state drives, USB flash drives, and memory modules. Alternatively, the computer-executable instructions may be performed by specific hardware components that contain hardwired logic for performing all or a portion of disclosed methods, or by any combination of computer-readable storage media and hardware components.

The computer-executable instructions can be part of, for example, a dedicated software application or a software application that is accessed via a web browser or other software application (such as a remote computing application). Such software can be read and executed by, for example, a single computing device or in a network environment using one or more networked computers. Further, it is to be understood that the disclosed technology is not limited to any specific computer language or program. For instance, the disclosed technologies can be implemented by software written in C++, Java, Perl, Python, JavaScript, Adobe Flash, or any other suitable programming language. Likewise, the disclosed technologies are not limited to any particular computer or type of hardware.

Furthermore, any of the software-based embodiments (comprising, for example, computer-executable instructions for causing a computer to perform any of the disclosed methods) can be uploaded, downloaded or remotely accessed through a suitable communication means. Such suitable communication means include, for example, the Internet, the World Wide Web, an intranet, cable (including fiber optic cable), magnetic communications, electromagnetic communications (including RF, microwave, and infrared communications), electronic communications, or other such communication means.

As used in this application and in the claims, a list of items joined by the term "and/or" can mean any combination of the listed items. For example, the phrase "A, B and/or C" can mean A; B; C; A and B; A and C; B and C; or A, B and C. As used in this application and in the claims, a list of items joined by the term "at least one of' can mean any combination of the listed terms. For example, the phrase "at least one of A, B or C" can mean A; B; C; A and B; A and C; B and C; or A, B and C.

The disclosed methods, apparatuses and systems are not to be construed as limiting in any way. Instead, the present disclosure is directed toward all novel and nonobvious features and aspects of the various disclosed embodiments, alone and in various combinations and subcombinations with one another. The disclosed methods, apparatuses, and systems are not limited to any specific aspect or feature or combination thereof, nor do the disclosed embodiments require that any one or more specific advantages be present or problems be solved.

Theories of operation, scientific principles or other theoretical descriptions presented herein in reference to the apparatuses or methods of this disclosure have been provided for the purposes of better understanding and are not intended to be limiting in scope. The apparatuses and methods in the appended claims are not limited to those apparatuses and methods that function in the manner described by such theories of operation.

Although the operations of some of the disclosed methods are described in a particular, sequential order for convenient presentation, it is to be understood that this manner of description encompasses rearrangement, unless a particular ordering is required by specific language set forth herein. For example, operations described sequentially may in some cases be rearranged or performed concurrently. Moreover, for the sake of simplicity, the attached figures may not show the various ways in which the disclosed methods can be used in conjunction with other methods.

The following examples pertain to additional embodiments of technologies disclosed herein.

Example 1 is a method, comprising: receiving telemetry information for a computing device; determining a remedial action based on the telemetry information and/or information derived from the telemetry information; and causing the remedial action to be taken at the computing device; wherein the telemetry information comprises at least one of one or more switching KPIs (key performance indicators) for a virtual switching stack providing network communication to an application, one or more platform KPIs for the computing device, or topology information for the computing device; and wherein the application and the virtual switching stack are operating on the computing device.

Example 2 is the method of example 1, wherein the virtual switching stack comprises one or more virtual switching layers, the method further comprising determining the presence of errors at one or more of the virtual switching layers, the information derived from the telemetry information comprising information indicating the presence of the errors at the one or more of the virtual switching layers.

Example 3 is the method of example 2, further comprising determining whether the errors at the one or more of the virtual switching layers occur along a transmit path and/or a receive path of the virtual switching stack, the information derived from the telemetry information further comprising information indicating that the presence of the errors at the one or more of the virtual switching layers occur along the transmit path and/or the receive path of the virtual switching stack.

Example 4 is the method of example 1, further comprising generating, by the computing device, the one or more switching KPIs.

Example 5 is the method of example 1, wherein the application is a VNF (virtual network function).

Example 6 is the method of example 1, wherein the application operates within a virtual machine operating on the computing device and the virtual switching stack comprises a kernel network driver or a user mode PMD (poll mode driver), a virtual switch, and a virtual I/O interface.

Example 7 is the method of example 6, wherein the causing the remedial action to be taken comprises sending one or more instructions to at least one of the kernel network driver or the user mode PMD, the virtual switch, or the virtual I/O interface.

Example 8 is the method of example 1, wherein the computing device comprises a plurality of platform resources and the causing the remedial action to be taken comprises providing one or more instructions to or configuring at least one of the platform resources.

Example 9 is the method of example 1, wherein the application operates within a container operating on the computing device and the virtual switching stack comprises the container, a kernel network driver and a virtual switch.

Example 10 is the method of example 1, wherein the remedial action has an associated severity information and the causing the remedial action to be taken comprises selecting the remedial action to be taken based at least in part on the severity information.

Example 11 is the method of example 1, wherein the remedial action has an associated frequency and the causing the remedial action to be taken comprises selecting the remedial action to be taken based at least in part on the frequency.

Example 12 is the method of example 1, further comprising generating a report based on the telemetry information and/or the information generated from the telemetry information; and displaying the report on a display.

Example 13 is the method of example 12, wherein the generating the report comprises generating a graphical topology view of the computing device and the displaying the report comprises displaying the graphical topology view.

Example 14 is the method of example 1, wherein the causing the remedial action to be taken is performed automatically.

Example 15 is the method of example 1, wherein the causing the remedial action to be taken is performed in response to receiving user input indicating selection of the remedial action to be taken.

Example 16 is the method of example 1, wherein the remedial action to be taken has associated remedial action criteria, the causing the remedial action to be taken comprising determining that the remedial action criteria has been satisfied by the telemetry information and/or the information based on the telemetry information for a threshold period of time.

Example 17 is the method of example 1, wherein the remedial action to be taken has associated enforcement information, the enforcement information indicating whether the remedial action is to be taken automatically or to be taken subject to user approval.

Example 18 is the method of example 1, wherein the remedial action to be taken has associated enforcement information, the enforcement information indicating remedial action criteria to be satisfied by the telemetry data and/or information based on the telemetry based for a threshold period time before the remedial action is automatically taken.

Example 19 is the method of example 1, wherein the causing the remedial action to be taken comprises moving the application from the computing device to a different computing device.

Example 20 is the method of example 19, wherein the switching KPIs comprise a user space PMD (poll mode driver) receive packet drop rate, the platform KPIs comprise one or more platform RAS (reliability, accessibility, and serviceability) error KPIs, and the determining the remedial action comprises determining that the user space PMD receive packet drop rate is greater than zero and that the one or more platform RAS error KPIs indicate platform RAS errors have occurred on the computing device.

Example 21 is the method of example 1, wherein the causing the remedial action to be taken comprises moving at least a portion of traffic flowing through the virtual switching stack away from a first port of the computing device.

Example 22 is the method of example 21, wherein the switching KPIs comprise a user space PMD (poll mode driver) receive packet drop rate, the one or more platform KPIs comprises a CPU (central processing unit) utilization KPI for a core upon which the user space PMD is operating, and the determining the remedial action comprises determining that the user space PMD receive packet drop rate is greater than zero and that the CPU utilization KPI indicates the CPU utilization is substantially 100%.

Example 23 is the method of example 1, wherein the virtual switching stack comprises a virtual switch and the causing the remedial action to be taken comprises reconfiguring an IP (Internet Protocol) table of the virtual switch.

Example 24 is the method of example 23, wherein the switching KPIs comprise a virtual switch IP filter packet drop KPI and the determining the remedial action comprises determining that the virtual switch IP filter packet drop KPI indicates that a percentage of incoming traffic dropped due to one or more IP filters of the virtual switch exceeds a threshold percentage.

Example 25 is the method of example 1, wherein the virtual switching stack comprises a virtual switch and the causing the remedial action to be taken comprises increasing a number of cores upon which the virtual switch is executing.

Example 26 is the method of example 25, wherein the switching KPIs comprise a virtual switch IP (Internet Protocol) filter packet drop KPI and an incoming traffic rate KPI, wherein the determining the remedial action comprises determining that the virtual switch IP filter packet drop KPI indicates substantially all incoming packets are being dropped by one or more IP filters of the virtual switch.

Example 27 is the method of example 1, wherein the causing the remedial action to be taken comprises restarting the application.

Example 28 is the method of example 27, wherein the virtual switching stack comprises: a virtual I/O interface; and one or more layers below the virtual I/O interface in the virtual switching stack; wherein the determining the remedial action comprises determining that the switching KPIs indicate that the virtual I/O interface is dropping transmitted packets and that there are no errors associated with the one or more layers below the virtual I/O interface.

Example 29 is the method of example 1, wherein the causing the remedial action to be taken comprises starting one or more additional instances of the application.

Example 30 is the method of example 29, wherein the virtual switching stack comprises: a virtual I/O interface; and one or more layers below the virtual I/O interface in the virtual switching stack; wherein the determining the remedial action comprises determining the switching KPIs indicate that the virtual I/O interface is dropping received packets and that there are no errors associated with the one or more layers below the virtual I/O interface.

Example 31 is the method of example 1, wherein the virtual switching stack comprises: a virtual I/O interface layer; and one or more layers below the virtual I/O interface in the virtual switching stack; wherein the causing the remedial action to be taken comprises reducing traffic to the application and the determining the remedial action comprises determining that the switching KPIs indicate that there are errors along a receive path associated with the virtual I/O interface layer and the one or more layers below the virtual I/O interface, and that the errors associated with the virtual I/O interface occurred prior to the errors associated with the one or more layers below the virtual I/O interface.

Example 32 is the method of example 1, wherein the causing the remedial action comprises implementing a resiliency or redundancy failover strategy.

Example 33 is the method of example 32, wherein the determining the remedial action comprises determining that the switching KPIs indicate transmitted and received packets are being dropped by more than one layer of the virtual switching stack and that the platform KPIs indicate the presence of CPU or memory errors.

Example 34 is the method of example 1, wherein the remedial action to be taken comprises enabling a high-performance mode of a processor or core.

Example 35 is the method of example 1, wherein the virtual switching stack comprises a kernel network driver or user space PMD (poll mode driver) and the switching KPIs comprise at least one of a receive bit rate, a transmit bit rate, a number of received packets dropped, a number of received error packets, a number of received bytes, a number of received packets, a number of transmitted packets dropped, a number of transmitted error packets, a number of transmitted bytes, a number of transmitted packets, a number of packets dropped due to no receive descriptors available on a host processor, or a number of packets dropped due to no transmit descriptors available on the host processor.

Example 36 is the method of example 1, wherein the switching stack comprises a kernel network driver or user space PMD (poll mode driver) and the switching KPIs comprise an error free connection time, an error free transmission time, a network timeout duration, or a NIC (network interface controller) mean time between failures.

Example 37 is the method of example 1, wherein the virtual switching stack comprises a virtual switch and a virtual I/O interface, the switching KPIs comprising at least one of a transmit packet drops from the virtual I/O interface KPI, a transmitted packets dropped internally by the virtual switch due to IP (internet protocol) filters KPI, a transmitted packets dropped due to full virtual switch transmit queues KPI, a transmitted packets dropped due to exhausted virtual switch buffer memory KPI, a transmitted packets dropped due to virtual switch core overload KPI, or a transmitted packets dropped due to an unrecognized path or route KPI.

Example 38 is the method of example 1, wherein the virtual switching stack comprises a virtual switch and a virtual I/O interface, the switching KPIs comprising at least one of a received packet drops to the virtual I/O interface KPI, a received packets dropped internally by the virtual switch due to IP (internet protocol) filters KPI, a received packets dropped due to full virtual switch receive queues KPI, a received packets dropped due to exhausted virtual switch buffer memory KPI, a received packets dropped due to virtual switch core overload KPI, or a received packets dropped due to an unrecognized path or route KPI.

Example 39 is the method of example 1, wherein the application is executing within a container and the virtual switching stack comprises a container bridge, the switching KPIs comprising at least one of a transmit packet drops from the container KPI, a transmitted packets dropped internally by the container bridge due to NAT (network address translation) table KPI, a transmitted packets dropped due to full bridge transmit queues KPI, a transmitted packets dropped due to exhausted bridge buffer memory KPI, a transmitted packets dropped due to bridge core overload KPI, or a transmit packet drops due to an unrecognized path or route KPI.

Example 40 is the method of example 1, wherein the application is executing within a container and the virtual switching stack comprises a bridge, the switching KPIs comprising at least one of a received packet drops to the container KPI, a received packets dropped internally by the bridge due to NAT (network address translation) table KPI, a received packets dropped due to full bridge receive queues KPI, a received packets dropped due to exhausted bridge buffer memory KPI, a received packets dropped due to bridge core overload KPI, or a received packet drops due to an unrecognized path or route KPI.

Example 41 is the method of example 1, wherein the virtual switching stack comprises a virtual I/O interface, the switching KPIs comprising one or more virtual I/O interface receive error KPIs and/or one or more virtual I/O interface transmit error KPIs.

Example 42 is the method of example 1, wherein the platform KPIs comprise at least one of a list of cores with insufficient memory bandwidth, a list of cores with insufficient cache allocation, a core utilization KPI, a polling core utilization KPI, a list of cores and associated applications executing on individual of the cores, a list of core threads and applications associated with individual of the core threads, a list of cores executing at full utilization, a list of cores executing at a utilization above a utilization threshold, a CPU (central processing unit) utilization KPI, a CPU headroom KPI, or a platform RAS (reliability, accessibility, and serviceability) errors KPI.

Example 43 is the method of example 1, wherein the platform KPIs comprise at least one of an application accelerator utilization KPI, a queue manager utilization KPI, a last-level cache utilization KPI, a memory bandwidth KPI, a CPU (Central Processing Unit) configuration utilization percentage, or a PCIe (Peripheral Component Interconnect Express) utilization KPI.

Example 44 is the method of example 1, wherein the platform KPIs comprise at least one of a processor availability KPI, a processor error time KPI, a memory availability KPI, or a memory error time KPI.

Example 45 is the method of example 1, wherein the platform KPIs comprise at least one of a power headroom KPI, a temperature KPI, a core frequency KPI, an uncore frequency KPI, an instruction set KPI, a core sleep detection KPI, or core idle detection KPI.

Example 46 is the method of example 1, wherein the platform KPIs comprise at least one of a list of core threads and applications associated with individual of the core threads, a CPU power KPI, a core power KPI, a workload power KPI, and a platform power KPI.

Example 47 is the method of example 1, wherein the topology information comprises at least one of a number of CPUs (central processing units), a number of cores, a number of sockets, a number of logical CPUs per core, or NUMA (non-uniform memory access) information.

Example 48 is one or more non-transitory computer-readable storage media storing computer-executable instructions for causing a computer to perform any one of the methods of claims 1-47.

Example 49 is a computing system comprising one or more means to perform any one of the method of claims 1-47.

Example 50 is a computing system comprising: one or more processors; and one or more non-transitory computer-readable storage media having instructions stored thereon that, when executed, cause the one or more processors to perform any of the methods of claims 1-47.

Example 51 is a computing system, comprising: a virtual switching monitor to: receive telemetry information from a computing device; and derive information from the telemetry information; and a virtual switching controller to: receive at least a portion of the telemetry information and/or the information derived from the telemetry information from the virtual switching monitor; and determine a remedial action based on the at least the portion of the telemetry information and/or the information derived from the telemetry information; and cause the remedial action to be taken at the computing device; wherein the telemetry information comprises at least one of one or more switching KPIs (key performance indicators) for a virtual switching stack providing network communication to an application, one or more platform KPIs for the computing device, or topology information for the computing device; and wherein the application and the virtual switching stack operate on the computing device.

Example 52 is the computing system of example 51, wherein the virtual switching stack comprises one or more virtual switching layers, the virtual switching monitor further to determine the presence of errors at one or more of the virtual switching stack layers, the information derived from the telemetry information comprising information indicating the presence of the errors at the one or more of the virtual switching layers.

Example 53 is the computing system of example 52, the virtual switching monitor further to determine whether the presence of the errors at the one or more of the virtual switching layers occur along a transmit path and/or a receive path of the virtual switching stack, the information derived from the telemetry information further comprising information indicating that the presence of the errors at the one or more of the virtual switching layers occur along the transmit path and/or the receive path of the virtual switching stack.

Example 54 is the computing system of example 51, wherein the application is a VNF (virtual network function).

Example 55 is the computing system of example 51, wherein the application operates within a virtual machine operating on the computing device and the virtual switching stack comprises a kernel network driver or a user mode PMD (poll mode driver), a virtual switch, and a virtual I/O interface.

Example 56 is the computing system of example 55, wherein to cause the remedial action to be taken comprises to send one or more instructions to at least one of the kernel network driver or the user mode PMD, the virtual switch, or the virtual I/O interface.

Example 57 is the computing system of example 51, wherein the computing device comprises a plurality of platform resources and to cause the remedial action to be taken comprises to provide one or more instructions to or configuring at least one of the platform resources.

Example 58 is the computing system of example 51, wherein the application operates within a container operating on the computing device and the virtual switching stack comprises the container, a kernel network driver and a virtual switch.

Example 59 is the computing system of example 51, wherein the remedial action has associated severity information and to cause the remedial action to be taken comprises to select the remedial action to be taken based at least in part on the severity information.

Example 60 is the computing system of example 51, wherein the remedial action has an associated frequency and to cause the remedial action to be taken comprises to select the remedial action to be taken based at least in part on the frequency.

Example 61 is the computing system of example 51, the virtual switching monitor further to: generate a report based on the telemetry information and/or the information generated from the telemetry information; and display the report on a display.

Example 62 is the computing system of example 61, wherein to generate the report comprises to generate a graphical topology view of the computing device and to display the report comprises to display the graphical topology view.

Example 63 is the computing system of example 51, wherein to cause the remedial action to be taken is performed automatically.

Example 64 is the computing system of example 51, wherein to cause the remedial action to be taken is performed in response to receiving user input indicating selection of the remedial action to be taken.

Example 65 is the computing system of example 51, wherein the remedial action to be taken has associated with remedial action criteria, to cause the remedial action to be taken comprising to determine that the remedial action criteria has been satisfied by the telemetry information and/or the information based on the telemetry information for a threshold period of time.

Example 66 is the computing system of example 51, wherein the remedial action to be taken has associated enforcement information, the enforcement information indicating whether the remedial action is to be taken automatically or to be taken subject to user approval.

Example 67 is the computing system of example 51, wherein the remedial action to be taken has associated enforcement information, the enforcement information indicating remedial action criteria that is to be satisfied by the telemetry data and/or information based on the telemetry based for a threshold period time before the remedial action is automatically taken.

Example 68 is the computing system of example 51, wherein to cause the remedial action to be taken comprises to move the application from the computing device to a different computing device.

Example 69 is the computing system of example 68, wherein the switching KPIs comprise a user space PMD (poll mode driver) receive packet drop rate, the platform KPIs comprise one or more platform RAS (reliability, accessibility, and serviceability) error KPIs, and to determine the remedial action comprises to determine that the user space PMD receive packet drop rate is greater than zero and that the one or more platform RAS error KPIs indicate platform RAS errors have occurred on the computing device.

Example 70 is the computing system of example 51, wherein to cause the remedial action to be taken comprises to move at least a portion of traffic flowing through the virtual switching stack away from a first port of the computing device.

Example 71 is the computing system of example 70, wherein the switching KPIs comprise a user space PMD (poll mode driver) receive packet drop rate, the one or more platform KPIs comprises a CPU (central processing unit) utilization KPI for a core upon which the user space PMD is operating, and to determine the remedial action comprises to determine that the user space PMD receive packet drop rate is greater than zero and that the CPU utilization KPI indicates the CPU utilization is substantially 100%.

Example 72 is the computing system of example 51, wherein the virtual switching stack comprises a virtual switch and to cause the remedial action to be taken comprises to reconfigure an IP (Internet Protocol) table of the virtual switch.

Example 73 is the computing system of example 72, wherein the switching KPIs comprise a virtual switch IP filter packet drop KPI and to determine the remedial action comprises to determine that the virtual switch IP filter packet drop KPI indicates that a percentage of incoming traffic dropped due to one or more IP filters of the virtual switch exceeds a threshold percentage.

Example 74 is the computing system of example 51, wherein the virtual switching stack comprises a virtual switch and to cause the remedial action to be taken comprises to increase a number of cores upon which the virtual switch is executing.

Example 75 is the computing system of example 74, wherein the switching KPIs comprise a virtual switch IP (Internet Protocol) filter packet drop KPI and an incoming traffic rate KPI, wherein to determine the remedial action comprises to determine that the virtual switch IP filter packet drop KPI indicates substantially all incoming packets are being dropped by one or more IP filters of the virtual switch.

Example 76 is the computing system of example 51, wherein to cause the remedial action to be taken comprises to restart the application.

Example 77 is the computing system of example 76, wherein the virtual switching stack comprises: a virtual I/O interface; and one or more layers below the virtual I/O interface in the virtual switching stack; wherein to determine the remedial action comprises to determine that the switching KPIs indicate that the virtual I/O interface is dropping transmitted packets and that there are no errors associated with the one or more layers below the virtual I/O interface.

Example 78 is the computing system of example 51, wherein to cause the remedial action to be taken comprises starting one or more additional instances of the application.

Example 79 is the computing system of example 78, wherein the virtual switching stack comprises: a virtual I/O interface; and one or more layers below the virtual I/O interface in the virtual switching stack; wherein to determine the remedial action comprises to determine that the switching KPIs indicate that the virtual I/O interface is dropping received packets and that there are no errors associated with the one or more layers below the virtual I/O interface.

Example 80 is the computing system of example 51, wherein the virtual switching stack comprises: a virtual I/O interface layer; and one or more layers below the virtual I/O interface in the virtual switching stack; wherein to cause the remedial action to be taken comprises to reduce traffic to the application and to determine the remedial action comprises to determine that the switching KPIs indicate that there are errors along a receive path associated with the virtual I/O interface layer and the one or more layers below the virtual I/O interface, and that the errors associated with the virtual I/O interface occurred prior to the errors associated with the one or more layers below the virtual I/O interface.

Example 81 is the computing system of example 51, wherein to cause the remedial action comprises implementing a resiliency or redundancy failover strategy.

Example 82 is the computing system of example 81, wherein to determine the remedial action comprises to determine that the switching KPIs indicate transmitted and received packets are being dropped by more than one layer of the virtual switching stack and that the platform KPIs indicate the presence of CPU or memory errors.

Example 83 is the computing system of example 51, wherein the remedial action to be taken comprises enabling a high-performance mode of a processor or core.

Example 84 is the computing system of example 51, wherein the virtual switching stack comprises a kernel network driver or user space PMD (poll mode driver) and the switching KPIs comprise at least one of a receive bit rate, a transmit bit rate, a number of received packets dropped, a number of received error packets, a number of received bytes, a number of received packets, a number of transmitted packets dropped, a number of transmitted error packets, a number of transmitted bytes, a number of transmitted packets, or a number of packets dropped due to no receive descriptors available on a host processor, or a number of packets dropped due to no transmit descriptors available on the host processor.

Example 85 is the computing system of example 51, wherein the switching stack comprises a kernel network driver or user space PMD (poll mode driver) and the switching KPIs comprise an error free connection time, an error free transmission time, a network timeout duration, or a NIC (network interface controller) mean time between failures.

Example 86 is the computing system of example 51, wherein the virtual switching stack comprises a virtual switch and a virtual I/O interface, the switching KPIs comprising at least one of a transmit packet drops from the virtual I/O interface KPI, a transmitted packets dropped internally by the virtual switch due to IP (internet protocol) filters KPI, a transmitted packets dropped due to full virtual switch transmit queues KPI, a transmitted packets dropped due to exhausted virtual switch buffer memory KPI, a transmitted packets dropped due to virtual switch core overload KPI, or a transmitted packets dropped due to an unrecognized path or route KPI.

Example 87 is the computing system of example 51, wherein the virtual switching stack comprises a virtual switch and a virtual I/O interface, the switching KPIs comprising at least one of a received packet drops to the virtual I/O interface KPI, a received packets dropped internally by the virtual switch due to IP (internet protocol) filters KPI, a received packets dropped due to full virtual switch receive queues KPI, a received packets dropped due to exhausted virtual switch buffer memory KPI, a received packets dropped due to virtual switch core overload KPI, or a received packets dropped due to an unrecognized path or route KPI.

Example 88 is the computing system of example 51, wherein the application is executing within a container and the virtual switching stack comprises a container bridge, the switching KPIs comprising at least one of a transmit packet drops from the container KPI, a transmitted packets dropped internally by the container bridge due to NAT (network address translation) table KPI, a transmitted packets dropped due to full bridge transmit queues KPI, a transmitted packets dropped due to exhausted bridge buffer memory KPI, a transmitted packets dropped due to bridge core overload KPI, or a transmit packet drops due to an unrecognized path or route KPI.

Example 89 is the computing system of example 51, wherein the application is executing within a container and the virtual switching stack comprises a bridge, the switching KPIs comprising at least one of a received packet drops to the container KPI, a received packets dropped internally by the bridge due to NAT (network address translation) table KPI, a received packets dropped due to full bridge receive queues KPI, a received packets dropped due to exhausted bridge buffer memory KPI, a received packets dropped due to bridge core overload KPI, or a received packet drops due to an unrecognized path or route KPI.

Example 90 is the computing system of example 51, wherein the virtual switching stack comprises a virtual I/O interface, the switching KPIs comprising one or more virtual I/O interface receive error KPIs and/or one or more virtual I/O interface transmit error KPIs.

Example 91 is the computing system of example 51, wherein the platform KPIs comprise at least one of a list of cores with insufficient memory bandwidth, a list of cores with insufficient cache allocation, a core utilization KPI, a polling core utilization KPI, a list of cores and associated applications executing on individual of the cores, a list of core threads and applications associated with individual of the core threads, a list of cores executing at full utilization, a list of cores executing at a utilization above a utilization threshold, a CPU (central processing unit) utilization KPI, a CPU headroom KPI, or a platform RAS (reliability, accessibility, and serviceability) errors KPI.

Example 92 is the computing system of example 51, wherein the platform KPIs comprise at least one of an application accelerator utilization KPI, a queue manager utilization KPI, a last-level cache utilization KPI, a memory bandwidth KPI, a CPU (Central Processing Unit) configuration utilization percentage, or a PCIe (Peripheral Component Interconnect Express) utilization KPI.

Example 93 is the computing system of example 51, wherein the platform KPIs comprise at least one of a processor availability KPI, a processor error time KPI, a memory availability KPI, or a memory error time KPI.

Example 94 is the computing system of example 51, wherein the platform KPIs comprise at least one of a power headroom KPI, a temperature KPI, a core frequency KPI, an uncore frequency KPI, an instruction set KPI, a core sleep detection KPI, or core idle detection KPI.

Example 95 is the computing system of example 51, wherein the platform KPIs comprise at least one of a list of core threads and applications associated with individual of the core threads, a CPU power KPI, a core power KPI, a workload power KPI, and a platform power KPI.

Example 96 is the computing system of example 51, wherein the topology information comprises at least one of a number of CPUs (central processing units), a number of cores, a number of sockets, a number of logical CPUs per core, or NUMA (non-uniform memory access) information.

## Claims

1. A method, comprising:
receiving telemetry information for a computing device;
determining a remedial action based on the telemetry information and/or information derived from the telemetry information; and
causing the remedial action to be taken at the computing device;
wherein the telemetry information comprises at least one of one or more switching KPIs (key performance indicators) for a virtual switching stack providing network communication to an application, one or more platform KPIs for the computing device, or topology information for the computing device; and
wherein the application and the virtual switching stack are operating on the computing device.

2. The method of claim 1, wherein the virtual switching stack comprises one or more virtual switching layers, the method further comprising determining the presence of errors at one or more of the virtual switching layers, the information derived from the telemetry information comprising information indicating the presence of the errors at the one or more of the virtual switching layers.

3. The method of claim 2, further comprising determining whether the errors at the one or more of the virtual switching layers occur along a transmit path and/or a receive path of the virtual switching stack, the information derived from the telemetry information further comprising information indicating that the presence of the errors at the one or more of the virtual switching layers occur along the transmit path and/or the receive path of the virtual switching stack.

4. The method of one of the previous claims, wherein the application operates within a virtual machine operating on the computing device and the virtual switching stack comprises a kernel network driver or a user mode PMD (poll mode driver), a virtual switch, and a virtual I/O interface; wherein the causing the remedial action to be taken comprises sending one or more instructions to at least one of the kernel network driver or the user mode PMD, the virtual switch, or the virtual I/O interface.

5. The method of one of the previous claims, wherein the remedial action has an associated severity information and the causing the remedial action to be taken comprises selecting the remedial action to be taken based at least in part on the severity information.

6. The method of one of the previous claims, further comprising:
generating a report based on the telemetry information and/or the information generated from the telemetry information; and
displaying the report on a display.

7. The method of one of the previous claims, wherein the remedial action to be taken has associated remedial action criteria, the causing the remedial action to be taken comprising determining that the remedial action criteria has been satisfied by the telemetry information and/or the information based on the telemetry information for a threshold period of time.

8. The method of one of the previous claims, wherein the remedial action to be taken has associated enforcement information, the enforcement information indicating remedial action criteria to be satisfied by the telemetry data and/or information based on the telemetry based for a threshold period time before the remedial action is automatically taken.

9. The method of one of the previous claims, wherein the causing the remedial action to be taken comprises moving the application from the computing device to a different computing device.

10. The method of claim 9, wherein the switching KPIs comprise a user space PMD (poll mode driver) receive packet drop rate, the platform KPIs comprise one or more platform RAS (reliability, accessibility, and serviceability) error KPIs, and the determining the remedial action comprises determining that the user space PMD receive packet drop rate is greater than zero and that the one or more platform RAS error KPIs indicate platform RAS errors have occurred on the computing device.

11. The method of one of the previous claims, wherein the causing the remedial action to be taken comprises moving at least a portion of traffic flowing through the virtual switching stack away from a first port of the computing device.

12. The method of claim 11, wherein the switching KPIs comprise a user space PMD (poll mode driver) receive packet drop rate, the one or more platform KPIs comprises a CPU (central processing unit) utilization KPI for a core upon which the user space PMD is operating, and the determining the remedial action comprises determining that the user space PMD receive packet drop rate is greater than zero and that the CPU utilization KPI indicates the CPU utilization is substantially 100%.

13. One or more non-transitory computer-readable storage media storing computer-executable instructions for causing a computer to perform any one of the methods of claims 1-12.

14. A computing system comprising one or more means to perform any one of the method of claims 1-12.

15. A computing system comprising:
one or more processors; and
one or more non-transitory computer-readable storage media having instructions stored thereon that, when executed, cause the one or more processors to perform any of the methods of claims 1-12.
